# EUROPEAN PATENT SPECIFICATION

(11) **EP 0 586 510 B1**
(45) Date of publication and mention of the grant of the patent: **06.09.1995**
(21) Application number: 92911981.6
(22) Date of filing: 09.06.1992
(51) Int. Cl.: B62D 21/02

(54) **FRAME MEMBER FOR A VEHICLE**
RAHMENTEIL FÜR EIN FAHRZEUG
ELEMENT DE CHASSIS POUR VEHICULE

(30) Priority: 06.06.1991 SE 9101724
(43) Date of publication of application: 16.03.1994
(73) Proprietor: SJÖLUND, Anders, S-921 34 Lycksele (SE)
(72) Inventor: SJÖLUND, Anders, S-921 34 Lycksele (SE)
(74) Representative: Onn, Thorsten
(86) International application number: SE9200391
(87) International publication number: WO9221548

(56) References cited:
- EP-A- 0 473 075
- FR-A- 2 540 059
- GB-A- 548 897
- US-A- 3 088 750

## Description

This invention relates to a frame member for vehicles, for instance trailers, the frame member being created by two essentially similar but inverted frame member parts, which are put together, and each frame member part comprising in position of use an essentially vertical, relatively long web portion, from the upper and lower ends of which projects an essentially horizontal portion of predetermined and essentially the same length.

Such a frame member is previously known by GB patent No. 548.897. The portions 25 of the frame member which are intended to rest against each other are directed outwards, which means that these portions have to be of predetermined and exact length. Of course this means an increase of expenses for manufacturing the frame member. Another fact that contributes to high manufacturing expenses is that the distance elements consist of impacts made along the entire member. Moreover, the known frame member has no lightening holes, whereby it becomes unnecessarily heavy and ungainly.

This invention relates to remove the problems with known technique. This has been made possible by a frame member of the kind mentioned by way of introduction which is characterized by the combination of the following features:
- Each frame member part has an essentially vertical portion projecting downwards from the free end of the upper horizontal portion, and an essentially vertical portion projecting upwards from the free end of the lower horizontal portion;
- The frame member parts are so made that when the frame member parts are put together to a frame member, the essentially vertical portions of the one frame member rest against the corresponding portions of the other frame member; and
- The frame member has detachable distance elements which are arranged between the frame member parts. Due to that fact the vertical portions of each frame member part, which parts are intended to rest against each other, are directed inwards, and therefore the length of these portions is of no importance. This means that it is also possible to utilize rest plates when manufacturing the frame member parts, and therefore the manufacturing expenses become low. A contribution to the low manufacturing cost is also that fact that the distance elements are not integrated in the frame member part itself but consist of detachable parts. Due to the special arrangement of certain distance elements 13 between the frame member parts, the torsional och flexured rigidity of the frame member is improved. Due to the fact that the frame member has such a high rigidity, relatively large lightening holes can be allowed. Due to these lightening holes the weight of the frame member is essentially reduced, which of course is for benefit of the commercial cargo independantly if the frame member is to be used in trailers or trucks.

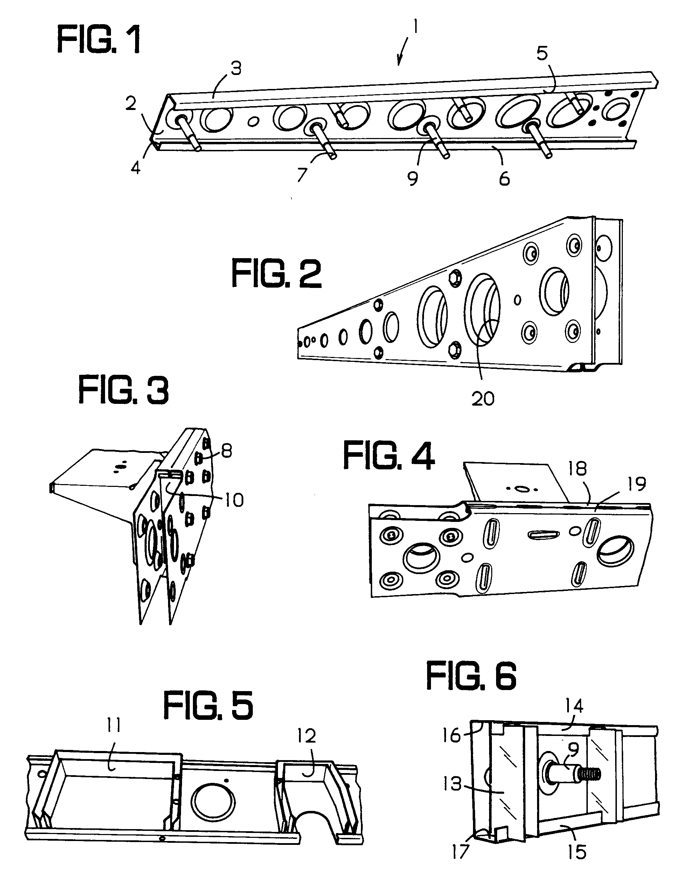

Two preferred embodiments of the frame member according to the invention shall be described more closely below, reference being made to the accompanying drawings, where Fig. 1 shows a frame member part consisting essentially of the one half of the frame member, Fig. 2 shows a frame member consisting of two frame member parts according to Fig. 1, which frame member parts are put together, Fig. 3 shows a portion of a frame member put together by means of a bolt joint, Fig. 4 shows a portion of another frame member, put together by means of welding, and Figs. 5 and 6 show a portion of a frame member part, provided with distance elements.

As appears from Figs. 1, 2 the frame member is built up by two essentially similar but inverted frame member parts 1 which are put together in a suitable way. According to these figures the frame member part and by that the frame member narrows in the one direction, i.e. the width measure in this direction diminishes. Of course, the invention idea is applicable upon other types of members, for instance members of equal width. The cross section of each member part 1 has the form of a formal C, i.e. the cross section has an essentially vertical, relatively long main portion 2, an essentially horizontal short portion 3, 4, which connects to the upper and lower ends of the main portion and an essentially vertical, short portion 5, 6, which projects downwards from the free end of the upper horizontal portion 3 and projects upwards from the free end of the lower horizontal portion 4.

When making the frame member, two inverted member parts are put against each other so that the vertical portions 5, 6 of these ones which portions project downwards and upwards from the horizontal portion 3, 4, respectively, rest against each other. Thereafter the member parts can be screwed together at suitable places along the same by means of bolts 7, 8, as is shown in Figs. 2, 3. In this connection must be controlled that preferably detachable distance elements 9-13 (see Figs. 1, 3, 5, 6) are applied between the member parts 1 in order to prevent portions of the member parts to be bent inwards when drawing together the same. As appears from Fig. 1 the distance elements comprise sleeves 9 which are put upon the bolts 7. In Figs. 3, 5 the distance elements comprise intermediate inserts 10, 11, 12 in the form of thin plate bands, bent in a suitable way, which accordingly are positioned between the member parts 1. These intermediate inserts may at least on the edge surfaces resting against the one frame member part be provided with a plurality of projections which are intended to go into engagement with corresponding recesses or holes in the member part. Due to that fact the distance element is locked in relation to the member parts.

In Fig. 6 is shown a strong type of distance element 13 which is preferably intended to be applied between the member parts in the fore part of the frame of the trailer, i.e. that part of the frame which is intended to be closest to the traction vehicle. The distance element 13 which is preferably made of a steel plate, has essentially a rectangular form and has a horizontal (in position of use) cross section which is like a U. As appears from the figure the short, vertical portions 14, 15 of the member part are cut away at the very end portions of the distance element 13 so that these end portions rest against the horizontal, short portions 16, 17 of the member part. Due to that fact the distance element is held effectively in place. By having this arrangement also the distance element 13 contributes to an increase of the rigidity of the member part.

Another way to fasten the member parts together for creating the frame member is to weld these ones together as is shown in Fig. 4. In this connection the weld joint is suitably made between the two horizontal portions 18, 19 at the top of and at the bottom of the member parts.

However, a bolt joint is to prefer since it allows the member parts to be loosened from each other in a simple way if the one or the other member part shall be exchanged.

When manufacturing each frame member part the starting position is a plane plate, whereafter the horizontal portions 3, 4 of the member part, which portions have a predetermined length, are pressed out. Thereafter the short vertical portion at the top 5 and at the bottom 6 is pressed out, control being made that the horizontal portion at the top and at the bottom gets extactly the right measure. If then the vertical portions 5, 6 should get different length, no extra measures have to be taken because these vertical portions when putting together the member parts will be directed into the frame member, and therefore the length of the portions has no importance.

The invention is of course not limited to what has been shown and described but can be modified within the scope of the following claims.

## Claims

1. A frame member for vehicles, for instance trailers, the frame member being created by two essentially similar but inverted frame member parts (1), which are put together, and each frame member part comprising in position of use an essentially vertical, relatively long main portion (2), from the upper and lower ends of which projects an essentially horizontal portion (3, 4) of predetermined and essentially the same length, **characterized** by the combination of the following features:
- each frame member part has an essentially vertical portion (5), which projects downwards from the free end of the upper horizontal portion (3), and an essentially vertical portion (6), which projects upwards from the free end of the lower horizontal portion (4);
- The frame member parts are so made that when the frame member parts are put together to a frame member, the essentially vertical portions (5, 6) of the one member part rest against the corresponding portions of the other member part; and
- The frame member has detachable distance elements (9-13) which are arranged between the frame member parts (1).

2. A frame member according to claim 1, **characterized** in that the distance elements (9-13) comprises strong means (13) which are made of steel plate and have essentially a rectangular form, and that the means (13) are held effectively in place between the frame member parts (1) by the fact that the means (13) are put into openings created by taking away parts of the veritical portions (14, 15) of the frame member part, which portions are directed to each other, whereby the means (13) come into contact with the horizontal portions (16, 17) of the frame member part (1).

3. A frame member according to claim 1 or 2, **characterized** in that the frame member parts (1) have been put together by means of a bolt joint.

4. A frame member according to claim 1, **characterized** in that the frame member parts (1) have been put together by means of welding.

5. A frame member according to any one of the preceding claims, **characterized** in that the frame member parts (1) are provided with lightening holes (20).

## Patentansprüche

1. Rahmen für Fahrzeuge, beispielsweise Anhänger, wobei der Rahmen aus zwei im wesentlichen gleichen, jedoch spiegelbildlichen Teilen (1) besteht, die zusammengefügt sind, und beide Teile einen im Betrieb im wesentlichen senkrechten, relativ langen Hauptteil (2) aufweisen, von dessen Ober- und Unterkante je ein im wesentlichen waagrechter Teil (3, 4) bestimmter und im wesentlichen gleicher Länge ausgeht, gekennzeichnet durch die Kombination folgender Merkmale:
- jeder Teil des Rahmens weist einen im wesentlichen senkrechten Abschnitt (5) auf, der vom freien Ende des oberen waagrechten Teils (3) nach unten ragt, sowie einen im wesentlichen senkrechten Abschnitt (6), der vom freien Ende des unteren waagrechten Teils (4) nach oben ragt;
- die Teile des Rahmens sind so gestaltet, dass beim Zusammenbau zu einem Rahmen die im wesentlichen senkrechten Teile (5, 6) des einen Teils gegen die entsprechenden Teile des anderen Teils stossen; und
- der Rahmen besitzt abnehmbare Abstandshalter (9 - 13), die zwischen den Teilen des Rahmens (1) angeordnet sind.

2. Rahmen nach Anspruch 1, dadurch gekennzeichnet, dass die Abstandshalter (9 - 13) im wesentlichen rechteckige Verstärkungsmittel (13) aus Stahlblech aufweisen, und dass diese Mittel (13) zwischen den Teilen des Rahmens (1) wirksam festgehalten sind, indem die Mittel (13) in Aussparungen greifen, welche in den senkrechten Teilen (14, 15) des Rahmens ausgeschnitten sind, wobei diese Teile einander gegenüberstehen, wodurch die Mittel (13) mit den waagrechten Teilen (16, 17) des Rahmenteils (1) in Berührung kommen.

3. Rahmen nach Anspruch 1 oder 2, dadurch gekennzeichnet, dass die Rahmenteile mittels einer Bolzenverbindung zusammengefügt sind.

4. Rahmen nach Anspruch 1, dadurch gekennzeichnet, dass die Rahmenteile (1) durch Schweissen zusammengefügt sind.

5. Rahmen nach einem der vorstehenden Ansprüche, dadurch gekennzeichnet, dass die Rahmenteile (1) gewichtssparende Aussparungen (20) aufweisen.

## Revendications

1. Elément de châssis pour véhicules, par exemple remorques, ledit élément de châssis étant constitué par deux parties du châssis (1) essentiellement similaires mais inversées qui sont jointes, et chaque partie du châssis comprenant, en position d'utilisation, une partie principale (2) verticale et relativement longue des extrémités supérieure et inférieure de laquelle s'étendent des parties (3, 4) essentiellement horizontales ayant une longueur déterminée et essentiellement égale, caractérisé par la combinaison des caractéristiques suivantes:
- chaque partie du châssis présente une partie (5) essentiellement verticale qui s'étend de l'extrémité libre du la partie horizontale supérieure (3) vers le bas, ainsi qu'une partie essentiellement verticale (6) qui s'étend de l'extrémité libre de la partie horizontale inférieure (4) vers le haut;
- les parties du châssis sont conformées de telle manière que lorsqu'elles sont jointes pour former un élément de châssis, les parties essentiellement verticales (5, 6) d'une partie du châssis reposent sur les parties correspondantes de l'autre partie du châssis; et
- l'élément de châssis présente des éléments d'écartement (9 - 13) amovibles qui sont disposés entre les parties du châssis (1).

2. Elément de châssis selon la revendication 1, caractérisé en ce que les éléments d'écartement (9 - 13) comprennent des moyens de renforcement (13) en tôle d'acier de forme essentiellement rectangulaire, et que lesdits moyens (13) sont efficacement maintenus entre les parties du châssis (1) par le fait que lesdits moyens (13) s'engagent dans des évidements crées en découpant des pièces des parties verticales (14, 15) des parties du châssis, lesdites parties se faisant face, et les moyens (13) étant ainsi en contact avec les parties horizontales (16, 17) dos parties du châssis (1).

3. Elément de châssis selon la revendication 1 ou 2, caractérisé en ce que les parties du châssis (1) sont assemblées par boulonnage.

4. Elément de châssis selon la revendication 1, caractérisé en ce que les parties du châssis (1) sont assemblées par soudage.

5. Elément de châssis selon l'une quelconque des revendications précédantes, caractérisé en ce que les parties du châssis présentent des évidements d'allégement.
